# FASCICULE DE BREVET EUROPEEN

(11) **EP 3 422 706 B1**
(45) Date de publication et mention de la délivrance du brevet: **03.09.2025**
(21) Numéro de dépôt: 18179858.8
(22) Date de dépôt: 26.06.2018
(51) Int. Cl.: B60Q 1/14, H04N 7/18, G03B 29/00, G03B 15/03

(54) **SYSTEME LUMINEUX POUR VEHICULE AUTOMOBILE**
LEUCHTSYSTEM FÜR KRAFTFAHRZEUG
LIGHT SYSTEM FOR MOTOR VEHICLE

(30) Priorité: 30.06.2017 FR 1756105
(43) Date de publication de la demande: 02.01.2019
(73) Titulaire: Valeo Vision, 93012 Bobigny Cedex (FR)
(72) Inventeur: SANCHEZ, Vanesa, 93012 BOBIGNY Cedex (FR); BEEV, Kostadin, 93012 BOBIGNY Cedex (FR); LANDIECH, Eric, 93012 BOBIGNY Cedex (FR)
(74) Mandataire: Valeo Visibility

(56) Documents cités:
- EP-A1- 1 978 295
- EP-A1- 2 026 097
- JP-A- 2005 085 621
- US-A1- 2012 116 632

## Description

L'invention concerne le domaine de l'éclairage et/ou de signalisation, notamment pour véhicules automobiles. Plus particulièrement, l'invention concerne un système lumineux pour véhicule automobile et un procédé de commande du système lumineux.

Un véhicule automobile est généralement équipé de projecteurs lumineux destinés à éclairer la route devant le véhicule, la nuit ou lorsque la luminosité est réduite, c'est-à-dire lorsque la luminosité ambiante est faible voire insuffisante, comme par exemple dans un tunnel, dans un parking souterrain, à l'aube, au crépuscule, lorsque le ciel est couvert... Les véhicules automobiles sont de plus en plus souvent équipés de dispositifs d'aide à la conduite, qui permettent d'adapter la forme des faisceaux lumineux émis par les projecteurs en fonction des conditions de circulation.

Ces fonctions d'aide à la conduite peuvent être utilisées en combinaison avec un dispositif d'acquisition, comme par exemple une caméra, permettant d'acquérir des images de la scène située à l'avant du véhicule. Un tel dispositif peut notamment être utilisé pour détecter les bandes de marquage des bordures de la voie de circulation sur laquelle le véhicule se situe, à l'avant du véhicule, afin de permettre à un système dans le véhicule d'émettre une alerte pour avertir le conducteur en cas de déviation de la trajectoire du véhicule ou en cas d'un franchissement d'une bande de marquage. Le dispositif d'acquisition peut également permettre de mesurer la distance entre le véhicule et le véhicule suivi afin de garantir le maintien d'une distance de sécurité suffisante. Il peut aussi permettre de détecter la présence d'autres véhicules sur la route et d'adapter le faisceau projeté de sorte à ne pas éblouir les conducteurs des autres véhicules.

Toutefois, la nuit ou lorsque la luminosité est réduite et par temps de pluie ou lorsque la route est mouillée, la visibilité des bandes de marquage au sol, et notamment des bandes de marquage des bordures de la voie de circulation dans laquelle se situe le véhicule, est fortement réduite. En effet, une couche d'eau recouvre les bandes de marquage et diminue la visibilité des bandes de marquage pour le conducteur et pour le dispositif d'acquisition, notamment sous l'effet des pertes de Fresnel.

Une solution pour obtenir une meilleure visibilité des bandes de marquages consiste à augmenter l'éclairage de la scène située à l'avant du véhicule. Cependant, cette solution n'est pas satisfaisante puisque cette augmentation d'éclairage doit être significative pour que la caméra ait une meilleure visibilité de la scène, ce qui entraine une gêne pour le conducteur du véhicule et l'éblouissement des conducteurs des véhicules croisés ou suivis du fait de la réflexion de la lumière sur la couche d'eau. Les conducteurs sont alors perturbés dans leur conduite, ce qui présente un risque pour leur sécurité.

Un but de l'invention est donc de fournir un système lumineux permettant d'augmenter la visibilité de la scène située à l'avant du véhicule, pour un dispositif d'acquisition, la nuit ou lorsque la luminosité est réduite et par temps de pluie ou sur route mouillée, et qui ne présente pas les inconvénients des solutions antérieures.

Il est également connu:
EP 1 978 295 A1 qui décrit un système de signalisation lumineuse pour véhicules. Une première source lumineuse est utilisée pour la signalisation. Une caméra capture l'extérieur du véhicule et mesure le contraste des images. Si le contraste descend en dessous d'un certain seuil, une deuxième source lumineuse plus puissante est utilisée.
US 2012/116632 A1 qui décrit un système qui active automatiquement les phares de brouillard sur la base du contraste détecté dans des images de l'extérieur du véhicule.
JP 2005 085621 A qui décrit un système de vision nocturne pour véhicules. Une lumières infra-rouge est activée de manière intermittente et une capteur infra-rouge capture des images de manière synchrone avec la fréquence d'émission de la lumière infra- rouge.
EP 2 026 097 A1 qui décrit un système lumineux pour véhicules pour illuminer les alentours du véhicule et qui peut simultanément être utilisé pour détecter la distance d'objets dans la direction de ladite lumière. Une source de lumière est modulée de telle façon que la modulation n'est pas perceptible par les personnes extérieures.

A cet effet, on prévoit selon l'invention un système lumineux de véhicule automobile comportant:
- un dispositif d'acquisition de la scène située à l'avant du véhicule comportant un capteur d'images,
- un premier dispositif d'éclairage comportant au moins une source de lumière apte à émettre un premier faisceau lumineux d'une première intensité éclairant ladite scène de sorte à augmenter le contraste des images captées par le capteur d'image,
- un deuxième dispositif d'éclairage comportant une source de lumière émettant un deuxième faisceau lumineux d'une deuxième intensité réalisant une fonction d'éclairage et/ou de signalisation réglementaire à l'avant du véhicule,
- une unité de commande qui actionne le premier dispositif d'éclairage lorsqu'une première valeur de contraste dite contraste brut des images captées par le capteur d'images est inférieure à un contraste seuil prédéfini, ledit contraste brut des images captées par le capteur d'images correspondant au contraste des images captées lorsque le dispositif d'éclairage n'est pas actionné,
caractérisé en ce que la source de lumière du premier dispositif d'éclairage est configurée pour générer un éclairage modulé à une fréquence supérieure à 50hz, et en ce que le dispositif d'acquisition est capable de faire une acquisition d'image au moment de la modulation où l'intensité de la source est la plus élevée, la modulation étant ainsi imperceptible par le conducteur dudit véhicule ou un observateur extérieur.

Ainsi, grâce à la présente invention, la scène située à l'avant du véhicule peut être rendue visible au dispositif d'acquisition sans entrainer de gêne pour le conducteur et sans éblouir les conducteurs des véhicules croisés ou suivis. En effet, les conducteurs ne perçoivent pas la modulation de l'éclairage générée par la source de lumière du premier dispositif d'éclairage. L'intensité moyenne qu'ils perçoivent est bien inférieure à l'intensité maximale émise par le premier dispositif d'éclairage au cours de la modulation qui permet au capteur d'images de capter des images avec un meilleur contraste.

Dans la présente invention, on entend par observateur extérieur les conducteurs des véhicules croisés ou suivis, les passagers de ces véhicules et les piétons sur les bas-côtés ou sur la route.

La modulation de l'éclairage consiste en la variation de l'intensité émise par la source de lumière du premier dispositif d'éclairage au cours du temps.

La modulation de l'éclairage générée par la source de lumière du premier dispositif d'éclairage est imperceptible pour le conducteur soit en raison des longueurs d'onde émises par la source, soit en raison de la variation de l'intensité de la source pendant une durée inférieure au temps de perception du scintillement de l'œil de sorte que la variation d'intensité de la source soit imperceptible pour le conducteur.

En effet, l'œil humain ne détecte plus des variations d'intensité lorsque la variation a lieu à une fréquence supérieure à une fréquence appelée fréquence de coupure égale à 50Hz, voire supérieure à 75Hz. L'œil ne perçoit donc pas de variation d'intensité lorsque les variations ont lieu sur un temps inférieur à un temps, appelé temps de perception de scintillement de l'œil est égal à 1/50s, préférentiellement, 1/75s.

La modulation de l'éclairage générée par la source de lumière du premier dispositif d'éclairage est perceptible par le dispositif d'acquisition qui est soit sensible aux longueurs d'onde émises par la source de lumière, et/ou soit capable de faire une acquisition d'image au moment de la modulation où l'intensité de la source est la plus élevée.

A la connaissance du demandeur, il n'existe aucun système à ce jour permettant d'améliorer la visibilité des bandes de marquage la nuit et par temps de pluie pour un dispositif d'acquisition sans gêner la perception de l'éclairage de la scène par le conducteur du véhicule ou les conducteurs des véhicules croisées ou suivis.

La fonction d'éclairage et/ou de signalisation réglementaire à l'avant du véhicule peut être une fonction de feu de route, de feu de croisement ou de feu de position. Comme dans le cadre de l'invention, on s'intéresse à des conditions de circulation sur route mouillée et lorsque la luminosité est réduite ou la nuit, le deuxième dispositif d'éclairage est donc actionné avant même que le premier dispositif d'éclairage ne soit actionné.

Avantageusement, le système lumineux selon l'invention comporte une unité de traitement des images captées par le capteur d'images pour déterminer le contraste de ces images, de préférence cette unité de traitement est intégrée dans le dispositif d'acquisition.

Dans un premier exemple, non couvert par l'invention, le premier dispositif d'éclairage comporte une source de lumière infrarouge et un capteur d'images sensible à la lumière infrarouge.

Dans la présente demande, une source de lumière peut comprendre un ou plusieurs émetteurs de lumière.

Cette source de lumière infrarouge émet un faisceau lumineux permettant de rendre la scène située à l'avant du véhicule visible pour le dispositif d'acquisition, et notamment pour le capteur d'images tout en ne gênant pas les conducteurs. En effet, la lumière infrarouge émise par la source de lumière du premier dispositif n'est pas perceptible par l'œil humain. Ainsi, le conducteur ne perçoit pas la modulation de l'éclairage générée par la source de lumière du premier dispositif d'éclairage. Il n'est donc pas gêné dans sa conduite. Et les conducteurs des véhicules croisés ou suivis ne sont également pas éblouis.

Cependant, le capteur d'images est sensible à la lumière infrarouge. Cet apport de lumière infrarouge permet donc d'augmenter le contraste des images captées par le capteur d'images.

La source de lumière infrarouge peut générer un éclairage modulé en émettant un faisceau lumineux de façon intermittente de sorte à éclairer ladite scène de façon discontinue. La source de lumière infrarouge est successivement allumée et éteinte. La scène située à l'avant du véhicule devient visible pour le dispositif d'acquisition lorsque la source de lumière infrarouge est allumée et émet le faisceau lumineux. L'acquisition d'au moins une image par le capteur d'images est alors synchronisée avec l'émission du premier faisceau lumineux.

De préférence, la source de lumière infrarouge peut générer un éclairage modulé en émettant un faisceau lumineux de façon continue. La source de lumière infrarouge est allumée en permanence de sorte à éclairer ladite scène en permanence. Le cas échéant, la source de lumière infrarouge peut émettre un faisceau lumineux avec un profil d'intensité lumineuse périodique présentant : une première partie constituée d'un ou plusieurs segments où l'intensité lumineuse est constante et égale à une intensité nominale positive, et une deuxième partie où l'intensité lumineuse est supérieure à l'intensité nominale d'une durée supérieure à la durée d'acquisition d'une image par le capteur d'images, la somme de la durée de deux parties étant égale à la durée d'une période.

La durée d'acquisition d'une image par le capteur d'images peut par exemple être inférieure à 33 ms, préférentiellement inférieure à 16 ms.

La scène située à l'avant du véhicule est éclairée en permanence, et est particulièrement visible par le capteur d'images au cours de la deuxième partie du profil d'intensité du faisceau lumineux périodique. Il est alors particulièrement avantageux pour le dispositif d'acquisition, d'acquérir une image de la scène située à l'avant du véhicule, au cours de cette deuxième partie. Au cours de la première partie, le faisceau lumineux émis par la source de lumière infrarouge peut ne pas être suffisamment intense pour permettre d'augmenter significativement le contraste des images qui seraient captées par le capteur d'images, mais il peut être exploité à d'autres fins, comme par exemple pour détecter la présence d'êtres vivants sur la route ou à ses abords tels que des animaux ou des personnes.

Dans un deuxième exemple, le premier dispositif d'éclairage comporte une source de lumière visible. Le système lumineux comprend également un dispositif de compensation permettant de compenser les première et deuxième intensités des faisceaux lumineux des premier et deuxième dispositifs d'éclairage de sorte que la modulation de l'éclairage générée par la source de lumière visible du premier dispositif d'éclairage soit imperceptible par le conducteur.

Dans ce deuxième exemple, le capteur d'images est sensible à la lumière visible émise par la source de lumière visible.

Pour compenser les première et deuxième intensités, le dispositif de compensation contrôle la première et/ou la deuxième intensité lumineuse.

Selon une première variante, le premier dispositif d'éclairage et le deuxième dispositif d'éclairage sont distincts.

Lorsque le premier dispositif d'éclairage est actionné, la source de lumière visible émet un premier faisceau lumineux périodique avec un profil d'intensité lumineuse périodique présentant une première partie constituée d'un ou plusieurs segments où l'intensité lumineuse est constante et égale à une intensité nominale positive ou nulle et, une deuxième partie où l'intensité lumineuse est supérieure à l'intensité nominale, la somme de la durée de deux parties étant égale à la durée d'une période, la durée de la période étant inférieure au temps de perception de scintillement de l'œil humain, et le dispositif de compensation diminuant la deuxième intensité de sorte à compenser les première et deuxième intensités.

Pour rappel, dans le cadre de l'invention, le deuxième dispositif d'éclairage est actionné avant même que le premier dispositif d'éclairage ne soit actionné.

Le dispositif de compensation diminue la deuxième intensité de sorte que l'intensité moyenne du faisceau projeté sur la route, résultant de la superposition des faisceaux lumineux issus des premier et deuxième dispositifs d'éclairage soit identique pendant tout le temps où le premier dispositif d'éclairage est activé. Ainsi, la modulation de l'éclairage générée par la source lumineuse du premier dispositif d'éclairage est imperceptible par le conducteur ou un observateur extérieur.

Selon une deuxième variante, le premier dispositif d'éclairage et le deuxième dispositif d'éclairage sont confondus.

Le cas échéant, la source de lumière du premier dispositif d'éclairage peut être identique à la source de lumière du deuxième dispositif. **Le** système lumineux présente alors un encombrement plus faible.

Dans cette variante, lorsque le premier dispositif d'éclairage n'est pas actionné, cela signifie que le faisceau lumineux émis par le dispositif correspond au deuxième faisceau lumineux. Le dispositif permet donc d'éclairer la route. Lorsque le premier dispositif d'éclairage est actionné, le premier faisceau lumineux vient se superposer avec le deuxième faisceau lumineux. L'activation du premier dispositif d'éclairage correspond à une modification du pilotage du deuxième dispositif d'éclairage pour pouvoir réaliser la fonction du premier dispositif d'éclairage.

Avantageusement, le dispositif de compensation pilote la source de lumière visible de manière à ce qu'elle émette un faisceau lumineux avec un profil d'intensité lumineuse périodique présentant : une première partie constituée d'un ou plusieurs segments où l'intensité lumineuse est constante et égale à une intensité nominale positive, une deuxième partie où l'intensité lumineuse est supérieure à l'intensité nominale, et une troisième partie constituée d'un ou plusieurs segments où l'intensité lumineuse est inférieure à l'intensité nominale pendant une durée telle que l'intensité moyenne du faisceau lumineux est constante et égale à l'intensité nominale sur une période, la somme de la durée de chacune des trois parties étant égale à la durée d'une période, et la somme de la durée de la deuxième et de la troisième parties, appelée temps de compensation, étant inférieure au temps de perception de scintillement de l'œil humain.

Le temps de compensation doit être court devant le temps de perception de scintillement pour que la modulation ne soit pas perceptible par l'œil humain. Ainsi, il doit être inférieur à 1/50s, préférentiellement inférieur à 1/75s.

En particulier, l'intensité nominale est égale à la deuxième intensité.

Avantageusement, lorsque la source de lumière du premier dispositif émet un faisceau lumineux avec un profil d'intensité lumineuse périodique, l'acquisition d'au moins une image par le capteur d'images est synchronisée avec la deuxième partie du profil d'intensité lumineuse.

On entend par « synchronisé avec la deuxième partie du profil d'intensité lumineuse » que l'acquisition d'images par le capteur d'images est déclenchée sensiblement en même temps que la deuxième partie du profil d'intensité lumineuse. L'acquisition d'une image par le capteur d'images est réalisée pendant une durée déterminée qui dépend du dispositif d'acquisition. Il faut qu'au moins une partie de cette durée déterminée se passe au moment où la deuxième partie du profil d'intensité est émise, et de préférence, la totalité de cette durée déterminée se passe au moment où la deuxième partie du profil d'intensité est émise.

La deuxième partie du profil d'intensité lumineuse présente une intensité lumineuse supérieure à l'intensité lumineuse de toutes les autres parties du profil d'intensité lumineuse. La route située à l'avant du véhicule est donc mieux éclairée, ce qui permet au dispositif d'acquisition, et en particulier au capteur d'images, d'avoir une meilleure visibilité de la scène située à l'avant du véhicule. Comme la scène est mieux éclairée, l'image captée est moins parasitée par le bruit du capteur. On a donc un meilleur rapport signal sur bruit sur l'image captée au cours de la deuxième partie du profil d'intensité, ce qui permet d'obtenir une image avec un meilleur contraste.

Avantageusement, la source de lumière du premier dispositif d'éclairage émet une lumière polarisée de type P. La lumière polarisée de type P est moins réfléchie que la lumière non polarisée à l'interface entre l'air et la couche d'eau formée sur la route. Elle traverse donc mieux la couche d'eau et une plus grande partie de la lumière émise est alors réfléchie sur la route, pour une intensité donnée, ce qui permet au conducteur de mieux voir la route.

Le cas échéant, le premier dispositif d'éclairage peut comporter une source de lumière de type diode laser émettant de la lumière polarisée, ce qui évite de devoir introduire un polarisateur qui diminuerait l'intensité du faisceau émis par la source.

Ainsi, quelque soit le mode de réalisation, grâce au premier dispositif d'éclairage, on obtient une meilleure visibilité des bandes de marquage et/ou des marquages au sol pour le dispositif d'acquisition. Par l'expression « meilleure visibilité », on entend que le dispositif d'acquisition détecte plus distinctement les bandes de marquage et/ou les marquages au sol situés proches du véhicule et qu'il détecte également des bandes de marquages et/ou les marquages au sol qu'il ne détectait pas avant l'augmentation de l'éclairage de la scène.

Avantageusement, le système lumineux de véhicule automobile comporte un dispositif de restitution permettant de restituer au conducteur la scène située à l'avant du véhicule et capturée par le dispositif d'acquisition avec un contraste plus élevé que celui de la même scène perçue par le conducteur sans le dispositif de restitution.

Le dispositif de restitution peut être activé par l'unité de commande.

Le dispositif de restitution peut être indifféremment pris parmi : un afficheur tête haute, un écran d'affichage électronique vidéo, un écran à cristaux liquides intégré au véhicule ou d'un dispositif électronique portatif.

De préférence, le dispositif de restitution est un dispositif d'éclairage complémentaire permettant d'éclairer vers l'avant du véhicule. Avantageusement, le dispositif d'éclairage complémentaire est agencé pour éclairer les bandes de marquage des bordures de la voie de circulation sur laquelle se situe le véhicule, à l'avant du véhicule.

Selon une première variante, le dispositif d'éclairage complémentaire est distinct du premier dispositif d'éclairage et du deuxième dispositif d'éclairage.

Selon une deuxième variante, le dispositif d'éclairage complémentaire est confondu avec le deuxième dispositif d'éclairage.

Selon une troisième variante, le dispositif d'éclairage complémentaire est confondu avec le premier dispositif d'éclairage.

Dans le cas où le dispositif d'éclairage complémentaire et le premier dispositif d'éclairage sont confondus, on distingue le premier faisceau lumineux et le faisceau lumineux émis pour la restitution. La modulation de l'éclairage générée par la source de lumière du premier dispositif d'éclairage n'est pas perçue par le conducteur, en raison de la compensation réalisée avec le deuxième faisceau lumineux. En revanche, le conducteur perçoit le faisceau lumineux émis pour la restitution.

Le dispositif d'éclairage complémentaire comporte une matrice de micro-miroirs, notamment un composant de type DMD (pour l'acronyme anglais Digital Micro-mirror Device).

Alternativement, le dispositif d'éclairage complémentaire comporte une matrice de sources lumineuses. De préférence, la matrice comporte 20 lignes et 10 colonnes. Avantageusement, la matrice comporte 40 lignes et 20 colonnes.

Alternativement, le dispositif d'éclairage complémentaire comporte un système à balayage associant un faisceau laser et un MEMS pivotant sur deux axes orthogonaux ou deux MEMS pivotant chacun sur un axe, les axes desdits deux MEMS étant orthogonaux l'un par rapport à l'autre.

Avantageusement, le dispositif d'éclairage complémentaire est apte à émettre une lumière polarisée de type P. L'éclairage fourni par le dispositif d'éclairage complémentaire est alors mieux perçu par le conducteur.

L'invention concerne également un procédé de commande mettant en œuvre un tel système lumineux.

Le procédé de commande peut comprendre la succession des étapes suivantes.
Etape 1 : Acquisition de la scène située à l'avant du véhicule par le dispositif d'acquisition, et notamment par le capteur d'images
Etape 2: Calcul du contraste brut des images captées par le capteur d'images
   Le calcul du contraste peut notamment être effectué par l'unité de traitement. On appelle « contraste brut » le contraste des images captées par le capteur d'images sans tenir compte de l'éclairage du premier dispositif d'éclairage. Lorsque le premier dispositif d'éclairage n'est pas actionné, il correspond au contraste des images captées par le capteur d'images, et lorsque le premier dispositif d'éclairage est actionné, il correspond au contraste que les images captées par le capteur d'images auraient si le premier dispositif d'éclairage n'était pas actionné.
Etape 3 : Comparaison du contraste brut calculé à l'étape 2 au contraste seuil prédéfini
   - Si le contraste brut est supérieur au contraste seuil, reprise à l'étape 1 En effet, le premier dispositif n'a pas besoin d'être actionné. La scène est suffisamment visible pour le dispositif d'acquisition.
   - Si le contraste brut est inférieur au contraste seuil, passage à l'étape 4 En effet, la scène n'est pas suffisamment visible pour le dispositif d'acquisition. Le premier dispositif d'éclairage doit donc être actionné.
Etape 4 : Activation du premier dispositif d'éclairage
Etape 5 : Acquisition de la scène située à l'avant du véhicule par le dispositif d'acquisition
Etape 6 : Calcul du contraste corrigé des images captées par le capteur d'images
   Le « contraste corrigé » est le contraste des images prenant en compte l'apport de l'éclairage du premier dispositif d'éclairage. Il correspond au contraste des images captées par le capteur d'images lorsque le premier dispositif d'éclairage est actionné.
Etape 7: Calcul du contraste brut des images captées par le capteur d'images en tenant compte de l'apport d'éclairage du premier dispositif d'éclairage dans le contraste corrigé
   Connaissant l'apport d'éclairage du premier dispositif d'éclairage et le contraste corrigé calculé à l'étape 6, il est possible par un calcul de déduire le contraste brut.
Etape 8 : Comparaison du contraste brut calculé à l'étape 7 au contraste seuil prédéfini
   Seul le contraste brut peut être comparé au contraste seuil prédéfini. En effet, le contraste brut correspond au contraste de la scène sans l'apport de l'éclairage du premier dispositif d'éclairage. Le contraste corrigé est forcément supérieur au contraste seuil.
   - Si le contraste brut est supérieur au contraste seuil, passage à l'étape 9
   - Si le contraste brut est inférieur au contraste seuil, reprise à l'étape 5. Optionnellement, l'activation du dispositif de restitution de la scène située à l'avant du véhicule peut être activé, au cours d'une étape 10, avant la reprise à l'étape 5.
Etape 9 : Extinction du premier dispositif d'éclairage et reprise à l'étape 1

L'invention concerne également un véhicule automobile comportant un tel système lumineux ou des moyens permettant de mettre en œuvre un tel procédé.

D'autres caractéristiques et avantages de la présente invention apparaitront plus clairement à l'aide de la description et des dessins parmi lesquels :
- la figure 1 représente schématiquement en coupe partielle un véhicule équipé d'un système lumineux selon la présente invention ;
- la figure 2a représente les profils d'intensité lumineuse des faisceaux lumineux émis par les premier et deuxième dispositifs d'éclairage au cours du temps dans le cas où les deux dispositifs d'éclairage sont distincts et l'acquisition des images par le capteur d'images ;
- la figure 2b représente le profil d'intensité lumineuse du faisceau émis par le premier dispositif d'éclairage au cours du temps lorsque celui est confondu avec le deuxième dispositif d'éclairage et l'acquisition des images par le capteur d'images ;
- la figure 3a représente schématiquement la scène située à l'avant du véhicule en l'absence de dispositif d'éclairage complémentaire actif ;
- la figure 3b représente schématiquement la scène située à l'avant du véhicule lorsque le dispositif d'éclairage complémentaire est activé ;
- la figure 4 représente les différentes étapes du procédé mettant en œuvre un système lumineux selon la présente invention.

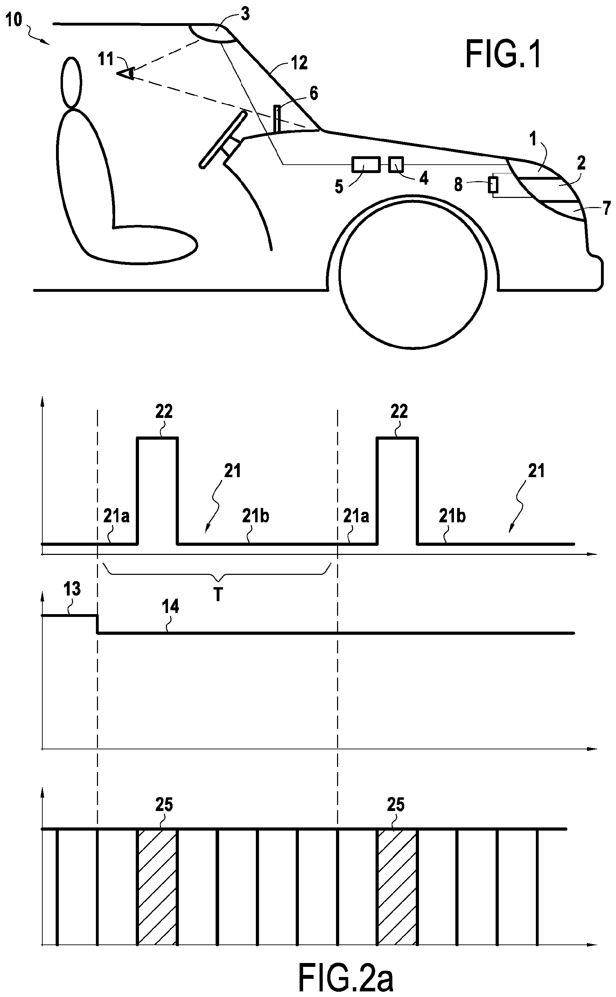

En référence à la figure 1, on a représenté schématiquement une coupe partielle d'un véhicule 10, équipé de projecteurs 9 et piloté par un conducteur symbolisé par son œil 11. Le conducteur 11 observe la scène située à l'avant du véhicule SA à travers le pare-brise 12.

Le projecteur 9 est équipé de plusieurs dispositifs d'éclairage : un premier dispositif d'éclairage 1, un deuxième dispositif d'éclairage 2 et un dispositif d'éclairage complémentaire 7. Le deuxième dispositif d'éclairage 2 est équipé d'une source de lumière apte à générer un faisceau lumineux de type feu de croisement, respectant les exigences de la réglementation ECE n°R112, étant entendu que l'homme du métier saura adapter l'invention pour que le deuxième dispositif d'éclairage 2 satisfasse les exigences de toute autre réglementation nationale ou régionale. Sur la figure 1, le premier dispositif d'éclairage 1 et le deuxième dispositif d'éclairage 2 sont distincts.

Conformément à la présente invention, le véhicule est équipé d'un dispositif d'acquisition 3 apte à acquérir des images de la scène située à l'avant du véhicule SA. Le dispositif d'acquisition 3 comporte un capteur d'images permettant de capter des images de la scène située à l'avant du véhicule SA. Le dispositif d'acquisition peut notamment prendre la forme d'une caméra comprenant un capteur CMOS par exemple, ou un capteur CCD.

Le dispositif d'acquisition 3 est relié à une unité de traitement 5 des images captées par le capteur d'images. L'unité de traitement 5 permet de déterminer le contraste brut des images captées par le capteur d'images. Pour que l'unité de traitement 5 calcul le contraste brut des images captées par le capteur d'images, elle est reliée à la commande d'activation du premier dispositif d'éclairage afin de savoir en permanence si le premier dispositif d'éclairage est actionné.

Lorsque le premier dispositif d'éclairage est actionné, l'unité de traitement 5 peut notamment calculer la valeur de contraste brut à partir de la valeur de contraste corrigé. En tenant compte de l'apport d'éclairage du premier dispositif d'éclairage dans le contraste d'une image captée par le capteur d'image, l'unité de traitement 5 peut calculer le contraste brut.

La valeur de contraste brut est ensuite transmise à une unité de commande 4 qui actionne le premier dispositif d'éclairage 1 lorsque le contraste brut est inférieur à un contraste seuil prédéfini ou qui laisse actionné le premier dispositif d'éclairage 1 lorsqu'il est déjà actionné.

Ce contraste seuil prédéfini correspond au contraste à partir duquel on peut considérer que la luminosité est trop faible pour que le conducteur et le dispositif d'acquisition puisse voir correctement la scène située à l'avant du véhicule SA et notamment les bandes de marquages.

Lorsque le premier dispositif d'éclairage 1 est actionné, la modulation de l'éclairage générée par la source de lumière du premier dispositif d'éclairage 1 n'est pas perceptible par le conducteur 11 ou un observateur extérieur alors qu'elle est perceptible par le dispositif d'acquisition 3. **Le** dispositif d'acquisition 3 perçoit l'effet de la lumière émise par le premier dispositif d'éclairage 1 sur l'éclairage de la scène SA.

La source de lumière du premier dispositif d'éclairage 1, non couvert par l'invention, peut être une source de lumière infrarouge. Le rayonnement de la source est alors invisible pour l'œil humain. Seul le capteur d'images doit alors être sensible à la lumière infrarouge. L'éclairage de la scène à l'aide de la source de lumière infrarouge permet ainsi au capteur d'images de capter les images de la scène située à l'avant du véhicule SA avec un meilleur contraste que s'il n'y avait pas d'éclairage.

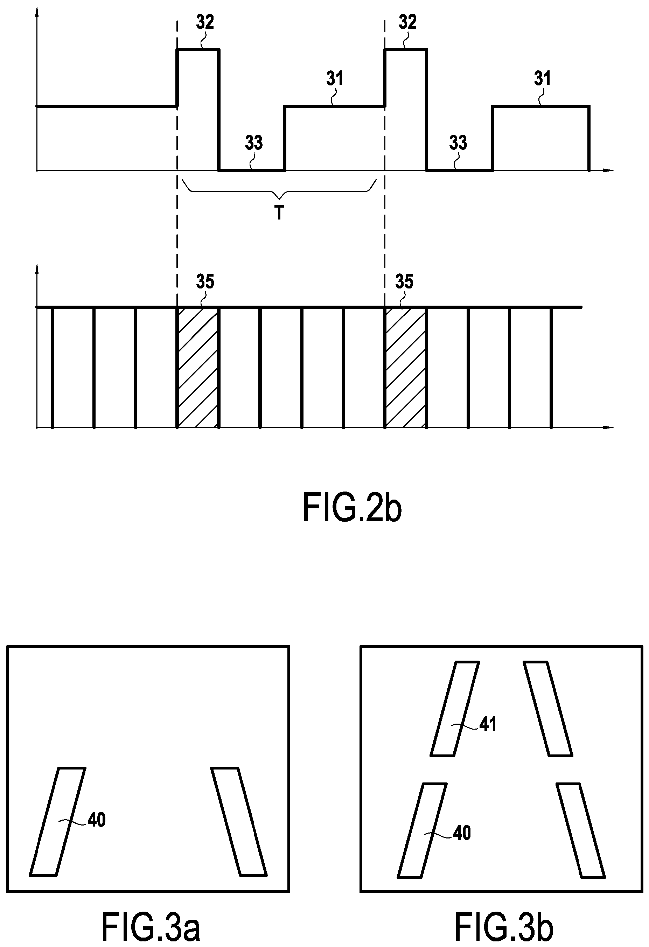

La source de lumière du premier dispositif peut alternativement être une source de lumière visible. Le capteur d'images étant alors sensible à la lumière visible émise par la source de lumière visible. Afin que la modulation de l'éclairage générée par la source de lumière du premier dispositif d'éclairage 1 soit imperceptible pour le conducteur 11 ou pour un observateur extérieur, le premier dispositif d'éclairage 1 et le deuxième dispositif d'éclairage 2 sont reliés à un dispositif de compensation 8 permettant de compenser les première et deuxième intensités des faisceaux lumineux émis par les premier 1 et deuxième 2 dispositifs d'éclairage. La compensation réalisée par le dispositif de compensation 8 est détaillée aux figures 2a et 2b.

L'activation du premier dispositif d'éclairage 1 ne gêne pas le conducteur ou un observateur extérieur puisqu'une fois activé, la modulation de l'éclairage générée par la source de lumière du premier dispositif d'éclairage 1 est imperceptible pour le conducteur ou un observateur extérieur. Ainsi, une fois activé et pendant tout le temps où le premier dispositif d'éclairage 1 est activé, l'éclairage de la scène située à l'avant du véhicule SA est perçu comme n'étant pas modifié par le conducteur 11 ou un observateur extérieur. Toutefois, le contraste des images captées par le capteur d'images est bien modifié. En effet, l'acquisition d'images par le capteur d'images est synchronisée avec l'émission de lumière du premier dispositif d'éclairage 1 de sorte que la scène située à l'avant du véhicule SA est visible sur au moins certaines des images captées par le capteur d'images. L'unité de traitement 5 peut notamment détecter sur ces images, la position des bandes de marquage qui ne sont pas visibles pour le conducteur.

Pour permettre au conducteur de connaître la position de ces bandes de marquages, le véhicule est équipé d'un dispositif de restitution. Ce dispositif de restitution peut par exemple être constitué d'un afficheur tête haute 6 ou encore d'un écran d'affichage électronique vidéo, d'un écran à cristaux liquides intégré au véhicule ou d'un dispositif électronique portatif.

Selon une variante également représentée sur la figure 1, le dispositif de restitution peut être un dispositif d'éclairage complémentaire 7, permettant d'éclairer vers l'avant du véhicule. Il permet notamment d'éclairer les bandes de marquages des bordures de la voie de circulation sur laquelle se situe le véhicule, à l'avant du véhicule.

La figure 2a représente les profils d'intensité lumineuse des faisceaux émis par les premier et deuxième dispositifs d'éclairage, dans le cas où la source de lumière du premier dispositif d'éclairage 1 est une source de lumière visible et lorsque le premier dispositif d'éclairage 1 et le deuxième dispositif d'éclairage 2 sont distincts.

Dans le cadre de l'invention, le véhicule 10 est en circulation de nuit, ou lorsque la luminosité est réduite. Le deuxième dispositif d'éclairage 2 est donc actionné.

Lorsque le contraste brut de la scène située à l'avant du véhicule SA devient inférieur à la valeur de contraste seuil, le premier dispositif d'éclairage 1 est actionné par l'unité de commande 4.

Lorsque le premier dispositif d'éclairage 1 est actionné, la source de lumière visible émet un premier faisceau lumineux périodique dans le temps avec un profil d'intensité lumineuse périodique.

Le profil d'intensité lumineuse périodique présente :
- une première partie 21 constituée de deux segments 21a et 21b où l'intensité lumineuse est constante et égale à une intensité nominale positive ou nulle et,
- une deuxième partie 22 où l'intensité lumineuse est supérieure à l'intensité nominale.

La somme de la durée de la première 21 et de la deuxième 21 parties est égale à la durée d'une période T. La durée de la période est inférieure au temps de perception de scintillement de l'œil humain.

Simultanément, le dispositif de compensation 8 diminue la deuxième intensité. La deuxième intensité passe d'une valeur maximale 13 à une valeur 14 inférieure à la valeur maximale 13. La diminution de la deuxième intensité est calculée par le dispositif de compensation de sorte que le conducteur ou un observateur extérieur ne perçoivent pas de changement dans l'éclairage de la scène située à l'avant du véhicule SA au cours de la modulation de l'éclairage générée par la source de lumière du premier dispositif d'éclairage 1. En fonction de l'intensité lumineuse de la première partie 21 du profil d'intensité lumineuse du premier faisceau lumineux de la source de lumière du premier dispositif d'éclairage 1, il est possible de jouer sur la signature visuelle du véhicule. En effet, plus l'intensité lumineuse de la première partie 21 est élevée et plus la valeur 14 de la deuxième intensité est faible. Ainsi, un observateur extérieur au véhicule 10 distinguera d'autant plus le premier dispositif d'éclairage 1 et verra que la deuxième intensité est atténuée..

Le capteur d'images est synchronisé avec la deuxième partie 22 du profil d'intensité lumineuse. L'acquisition d'une image 25 est déclenchée au moment du passage à la deuxième partie 22 du profil d'intensité. De plus, le capteur d'images présente une fréquence d'acquisition suffisamment élevée de sorte à pouvoir acquérir au moins une image 25 au cours de la deuxième partie 22 du profil d'intensité lumineuse du premier faisceau lumineux de la source de lumière du premier dispositif d'éclairage 1.

Pendant l'acquisition de cette image 25, la scène située à l'avant du véhicule SA est éclairée par le premier dispositif 1 avec une intensité maximale. Elle est donc particulièrement visible sur cette image 25. L'unité de traitement 5 peut notamment détecter la position des bandes de marquage sur cette image 25 qui ne sont pas visibles pour le conducteur.

La figure 2b représente les profils d'intensité lumineuse des faisceaux émis par les premier et deuxième dispositifs d'éclairage, dans le cas où la source de lumière du premier dispositif d'éclairage 1 est une source de lumière visible et lorsque le premier dispositif d'éclairage 1 est confondu avec le deuxième dispositif d'éclairage 2.

Dans cet exemple, la source de lumière visible réalisant le premier faisceau lumineux est identique à la source de lumière réalisant le deuxième faisceau lumineux.

Dans le cadre de l'invention, le véhicule 10 est en circulation de nuit, ou lorsque la luminosité est réduite. Le deuxième dispositif d'éclairage 2 est donc actionné. La source de lumière visible fonctionne et émet par exemple un faisceau de type feu de croisement ou feu de route.

Lorsque le contraste brut de la scène située à l'avant du véhicule SA devient inférieur à la valeur de contraste seuil, le premier dispositif d'éclairage 1 est actionné par l'unité de commande 4.

Lorsque le premier dispositif d'éclairage 1 est actionné, la source de lumière visible émet alors un faisceau lumineux périodique combinant le premier faisceau lumineux et le deuxième faisceau lumineux. Le dispositif de compensation 8 pilote la source de lumière visible de manière à ce qu'elle émette un faisceau lumineux avec un profil d'intensité lumineuse périodique présentant :
- une première partie 31 où l'intensité lumineuse est constante et égale à une intensité nominale positive. Cette intensité nominale correspond à l'intensité du faisceau du type feu de croisement.
- une deuxième partie 32 où l'intensité lumineuse est supérieure à l'intensité nominale.
- une troisième partie 33 où l'intensité lumineuse est inférieure à l'intensité nominale pendant une durée telle que l'intensité moyenne du faisceau lumineux est constante et égale à l'intensité nominale sur une période.

La somme de la durée de chacune des trois parties étant égale à la durée d'une période. La somme de la durée de la deuxième partie 32 et de la troisième partie 33 est inférieure au le temps de perception de scintillement de l'œil humain.

Elle est notamment inférieure à 1/50 s, préférentiellement inférieure à 1/75 s.

Le temps de perception de scintillement de l'œil humain étant supérieur à la durée de la période du profil d'intensité lumineuse, l'intensité perçue par l'œil humain sur une période est égale à l'intensité moyenne du faisceau lumineux, c'est-à-dire à l'intensité du faisceau lumineux de feu de croisement. Ainsi la modulation de l'éclairage générée par la source de lumière du premier dispositif est imperceptible par le conducteur ou un observateur extérieur.

Comme dans le cas où le premier dispositif d'éclairage 1 et le deuxième dispositif d'éclairage 2 sont distincts, le capteur d'images est synchronisé avec la deuxième partie 32 du profil d'intensité lumineuse. L'acquisition d'une image 35 est déclenchée au moment du passage à la deuxième partie 32 du profil d'intensité lumineuse.

Pendant l'acquisition de cette image 35, la scène située à l'avant du véhicule SA est éclairée par le premier dispositif 1 avec une intensité maximale. Elle est donc visible particulièrement visible sur cette image 35. L'unité de traitement 5 peut notamment détecter la position des bandes de marquage sur cette image 35 qui ne sont pas visibles pour le conducteur.

Une fois les bandes de marquages identifiées par l'unité de traitement 5, leur position est restituée au conducteur à l'aide du dispositif de restitution. Ce dispositif de restitution peut être un dispositif d'éclairage complémentaire 7 permettant d'éclairer vers l'avant du véhicule. Les figures 3a et 3b représentent schématiquement et respectivement la scène située à l'avant du véhicule SA lorsque le dispositif d'éclairage complémentaire 7 n'est pas activé, ou lorsque le véhicule ne comprend pas de dispositif d'éclairage complémentaire 7, et la scène située à l'avant du véhicule lorsque le dispositif d'éclairage complémentaire est activé.

Lorsque le dispositif d'éclairage complémentaire 7 n'est pas activé, seules les premières bandes de marquage 40 proches du véhicule sont visibles par le conducteur 11.

Lorsque le dispositif d'éclairage complémentaire 7 est activé, le conducteur 11 peut également voir des secondes bandes de marquages 41 situées à une distance plus importante du véhicule que les premières bandes de marquage 40 proches du véhicule et qui n'étaient pas visibles lorsque le dispositif d'éclairage complémentaire 7 n'était pas activé. Sur la figure 3b, seule une seconde bande de marquage 41 est représentée. Il est entendu que plusieurs secondes bandes de marquage 41 peuvent être rendues visibles grâce au dispositif d'éclairage complémentaire 7.

Le dispositif d'éclairage complémentaire 7 permet de rendre plus visible la scène située à l'avant du véhicule SA, et notamment les premières bandes de marquage 40 et les secondes bandes de marquage 41, ce qui augmente la sécurité du conducteur.

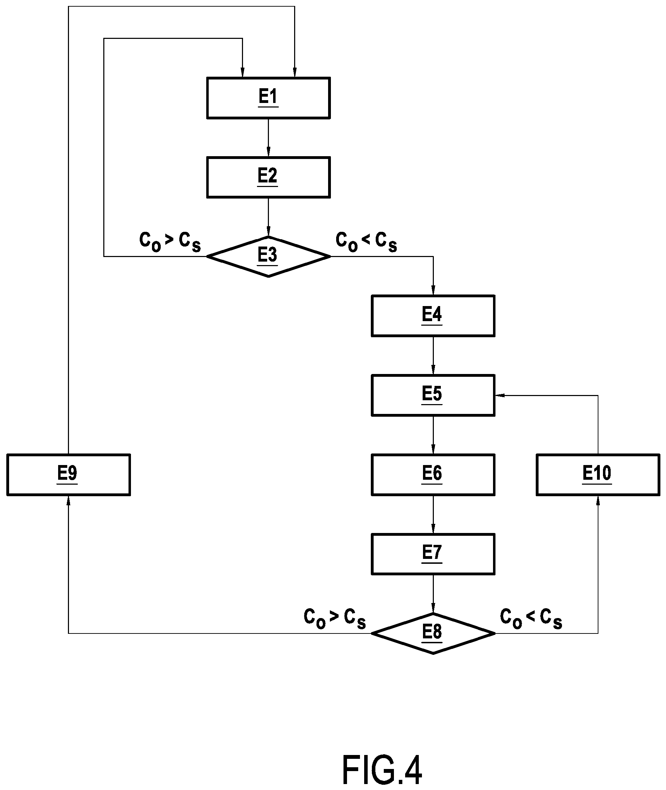

Le procédé mis en place pour mettre en œuvre le système lumineux selon l'invention et parvenir à augmenter la visibilité de la scène située à l'avant du véhicule SA comporte un grand nombre d'étapes qui sont présentées à la figure 4.

L'étape 1, E1, consiste en l'acquisition de la scène située à l'avant du véhicule SA par le dispositif d'acquisition 3, et notamment par le capteur d'images. Au cours de l'étape 2, E2, le contraste brut C₀ des images captées par le capteur d'images est calculé. Le contraste brut C₀ est ensuite comparé au contraste seuil Cₛ prédéfini au cours de l'étape 3, E3. Si le contraste brut C₀ est supérieur au contraste seuil Cₛ, le procédé reprend à l'étape E1. Si le contraste brut C₀ est inférieur au contraste seuil Cₛ, le procédé passe à l'étape 4, E4. L'étape E4 consiste en l'activation du premier dispositif d'éclairage 1. A l'étape 5, E5, le dispositif d'acquisition 3 acquiert la scène située à l'avant du véhicule SA. Le contraste corrigé C_{c} des images captées par le capteur d'images est ensuite calculé à l'étape 6, E6. Puis, au cours de l'étape 7, E7 le contraste brut C₀ des images captées par le capteur d'images est calculé en tenant compte de l'apport d'éclairage du premier dispositif d'éclairage 1 dans le contraste corrigé C_{c}. A l'étape 8, E8, le contraste brut C₀ calculé à l'étape E7 est comparé au contraste seuil Cₛ prédéfini. Si le contraste brut C₀ est supérieur au contraste seuil Cₛ, le procédé passe à l'étape 9, E9. Si le contraste brut C₀ est inférieur au contraste seuil Cₛ, le procédé passe à l'étape 10, E10. A l'étape E9 le premier dispositif d'éclairage est éteint, puis le procédé reprend à l'étape E1. A l'étape E10 le dispositif de restitution de la scène située à l'avant du véhicule SA est activé. Consécutivement à cette étape E10, le procédé reprend à l'étape E5.

## Revendications

1. Système lumineux de véhicule automobile comportant
- un dispositif d'acquisition (3) de la scène située à l'avant du véhicule SA comportant un capteur d'images,
- un premier dispositif d'éclairage (1) comportant au moins une source de lumière apte à émettre un premier faisceau lumineux d'une première intensité éclairant ladite scène de sorte à augmenter le contraste des images captées par le capteur d'image,
- un deuxième dispositif d'éclairage (2) comportant une source de lumière émettant un deuxième faisceau lumineux d'une deuxième intensité réalisant une fonction d'éclairage et/ou de signalisation réglementaire à l'avant du véhicule,
- une unité de commande (4) qui actionne le premier dispositif d'éclairage (1) lorsqu'une première valeur de contraste dite contraste brut C₀ des images captées par le capteur d'images est inférieure à un contraste seuil Cₛ prédéfini, ledit contraste brut des images captées par le capteur d'images correspondant au contraste des images captées lorsque le dispositif d'éclairage n'est pas actionné,
- le premier dispositif d'éclairage (1) et le deuxième dispositif d'éclairage (2) étant reliés à un dispositif de compensation (8) permettant de compenser les première et deuxième intensités des faisceaux lumineux émis par les premier (1) et deuxième (2) dispositifs d'éclairage,
**caractérisé en ce que** la source de lumière du premier dispositif d'éclairage (1) est une source visible configurée pour générer un éclairage modulé à une fréquence supérieure à 50hz, et **en ce que** le dispositif d'acquisition est capable de faire une acquisition d'image au moment de la modulation où l'intensité de la source est la plus élevée.

2. Système lumineux de véhicule automobile selon la revendication 1, **caractérisé en ce que** le premier dispositif d'éclairage (1) et le deuxième dispositif d'éclairage (2) sont distincts.

3. Système lumineux de véhicule automobile selon la revendication 1, **caractérisé en ce que** le premier dispositif d'éclairage (1) et le deuxième dispositif d'éclairage (2) sont confondus.

4. Système lumineux de véhicule automobile selon l'une quelconque des revendications précédentes, **caractérisé en ce que** la source de lumière du premier dispositif d'éclairage (1) émet une lumière polarisée de type P.

5. Système lumineux de véhicule automobile selon l'une quelconque des revendications précédentes, **caractérisé en ce qu'**il comporte un dispositif de restitution permettant de restituer au conducteur la scène située à l'avant du véhicule SA et capturée par le dispositif d'acquisition (3) avec un contraste plus élevé que celui de la même scène SA perçue par le conducteur sans le dispositif de restitution.

6. Système lumineux de véhicule automobile selon la revendication 5, **caractérisé en ce que** le dispositif de restitution est un dispositif d'éclairage complémentaire (7) permettant d'éclairer vers l'avant du véhicule et agencé pour éclairer les bandes de marquage (40, 41) des bordures de la voie de circulation sur laquelle se situe le véhicule, à l'avant du véhicule.

7. Procédé de commande d'un système lumineux de véhicule automobile selon l'une quelconque des revendications 1 à 6 **caractérisé en ce qu'**il comprend au moins la succession des étapes suivantes :
Etape 1 (E1) : Acquisition de la scène située à l'avant du véhicule SA par le dispositif d'acquisition (3)
Etape 2 (E2) : Calcul du contraste brut C₀ des images captées par le capteur d'images
Etape 3 (E3): Comparaison du contraste brut C₀ calculé à l'étape 2 (E2) au contraste seuil Cₛ prédéfini
Si le contraste brut C₀ est supérieur au contraste seuil Cₛ, reprise à l'étape 1 (E1)
Si le contraste brut C₀ est inférieur au contraste seuil Cₛ, passage à l'étape 4 (E4)
Etape 4 (E4): Activation du premier dispositif d'éclairage (1)
Etape 5 (E5) : Acquisition de la scène située à l'avant du véhicule SA par le dispositif d'acquisition (3)
Etape 6 (E6) : Calcul du contraste corrigé C_{c} des images captées par le capteur d'images
Etape 7 (E7) : Calcul du contraste brut C₀ des images captées par le capteur d'images en tenant compte de l'apport du premier dispositif d'éclairage (1) dans le contraste corrigé C_{c}
Etape 8 (E8): Comparaison du contraste brut C₀ calculé à l'étape 8 au contraste seuil Cₛ prédéfini
Si le contraste brut C₀ est supérieur au contraste seuil Cₛ, passage à l'étape 9 (E9)
Si le contraste brut C₀ est inférieur au contraste seuil Cₛ, reprise à l'étape 5 (E5)
Etape 9 (E9) : Extinction du premier dispositif d'éclairage (1) et reprise à l'étape 1 (E1)

8. Procédé selon la revendication précédente caractérisé à ce qu'il comprend en outre et successivement à l'étape 8 (E8), lorsque le contraste brut C₀ est inférieur au contraste seuil Cₛ, une étape 10 (E10) consistant en l'activation du dispositif de restitution de la scène située à l'avant du véhicule SA selon l'une des revendications 5 à 6, avant la reprise à l'étape 5 (E5).

## Patentansprüche

1. Kraftfahrzeug-Beleuchtungssystem, umfassend:
o eine Erfassungsvorrichtung (3) für die vor dem Fahrzeug SA befindliche Szene, umfassend einen Bildsensor,
o eine erste Beleuchtungsvorrichtung (1), umfassend mindestens eine Lichtquelle, die in der Lage ist, einen ersten Lichtstrahl einer ersten Intensität zu emittieren, der die besagte Szene beleuchtet, um den Kontrast der vom Bildsensor erfassten Bilder zu erhöhen,
o eine zweite Beleuchtungsvorrichtung (2), umfassend eine Lichtquelle, die einen zweiten Lichtstrahl einer zweiten Intensität emittiert, der eine Beleuchtungsfunktion und/oder eine reguläre Signalisierung an der Vorderseite des Fahrzeugs erfüllt,
o eine Steuereinheit (4), die die erste Beleuchtungsvorrichtung (1) aktiviert, wenn ein erster Kontrastwert, genannt Rohkontrast Co, der vom Bildsensor erfassten Bilder unter einem vordefinierten Schwellenkontrast Cs liegt, wobei der besagte Rohkontrast der vom Bildsensor erfassten Bilder dem Kontrast der erfassten Bilder entspricht, wenn die Beleuchtungsvorrichtung nicht aktiviert ist,
o die erste Beleuchtungsvorrichtung (1) und die zweite Beleuchtungsvorrichtung (2) sind mit einer Kompensationsvorrichtung (8) verbunden, die es ermöglicht, die erste und zweite Intensität der von der ersten (1) und zweiten (2) Beleuchtungsvorrichtung emittierten Lichtstrahlen zu kompensieren, **dadurch gekennzeichnet, dass** die Lichtquelle der ersten Beleuchtungsvorrichtung (1) eine sichtbare Quelle ist, die so konfiguriert ist, dass sie eine modulierte Beleuchtung mit einer Frequenz über 50 Hz erzeugt, und dass die Erfassungsvorrichtung in der Lage ist, ein Bild zum Zeitpunkt der Modulation zu erfassen, an dem die Intensität der Quelle am höchsten ist.

2. Kraftfahrzeug-Beleuchtungssystem nach Anspruch 1, **dadurch gekennzeichnet, dass** die erste Beleuchtungsvorrichtung (1) und die zweite Beleuchtungsvorrichtung (2) voneinander getrennt sind.

3. Kraftfahrzeug-Beleuchtungssystem nach Anspruch 1, **dadurch gekennzeichnet, dass** die erste Beleuchtungsvorrichtung (1) und die zweite Beleuchtungsvorrichtung (2) miteinander kombiniert sind.

4. Kraftfahrzeug-Beleuchtungssystem nach einem der vorhergehenden Ansprüche, **dadurch gekennzeichnet, dass** die Lichtquelle der ersten Beleuchtungsvorrichtung (1) polarisiertes Licht vom Typ P emittiert.

5. Kraftfahrzeug-Beleuchtungssystem nach einem der vorhergehenden Ansprüche, **dadurch gekennzeichnet, dass** es eine Wiedergabevorrichtung umfasst, die es dem Fahrer ermöglicht, die vor dem Fahrzeug SA befindliche und von der Erfassungsvorrichtung (3) erfasste Szene mit einem höheren Kontrast wiederzugeben, als dem der gleichen Szene SA, die der Fahrer ohne die Wiedergabevorrichtung wahrnimmt.

6. Kraftfahrzeug-Beleuchtungssystem nach Anspruch 5, **dadurch gekennzeichnet, dass** die Wiedergabevorrichtung eine ergänzende Beleuchtungsvorrichtung (7) ist, die es ermöglicht, die Fahrbahnmarkierungen (40, 41) der Fahrbahnränder, auf denen sich das Fahrzeug befindet, nach vorne zu beleuchten.

7. Verfahren zur Steuerung eines Kraftfahrzeug-Beleuchtungssystems nach einem der Ansprüche 1 bis 6, **dadurch gekennzeichnet, dass** es mindestens die folgende Abfolge von Schritten umfasst: Schritt 1 (E1): Erfassung der vor dem Fahrzeug SA befindlichen Szene durch die Erfassungsvorrichtung (3) Schritt 2 (E2): Berechnung des Rohkontrasts Co der vom Bildsensor erfassten Bilder Schritt 3 (E3): Vergleich des in Schritt 2 (E2) berechneten Rohkontrasts Co mit dem vordefinierten Schwellenkontrast Cs
Wenn der Rohkontrast Co größer ist als der Schwellenkontrast Cs, Rückkehr zu Schritt 1 (E1) Wenn der Rohkontrast Co kleiner ist als der Schwellenkontrast Cs, Übergang zu Schritt 4 (E4)
Schritt 4 (E4): Aktivierung der ersten Beleuchtungsvorrichtung (1) Schritt 5 (E5): Erfassung der vor dem Fahrzeug SA befindlichen Szene durch die Erfassungsvorrichtung (3) Schritt 6 (E6): Berechnung des korrigierten Kontrasts Co der vom Bildsensor erfassten Bilder Schritt 7 (E7): Berechnung des Rohkontrasts Co der vom Bildsensor erfassten Bilder unter Berücksichtigung des Beitrags der ersten Beleuchtungsvorrichtung (1) zum korrigierten Kontrast Co
Schritt 8 (E8): Vergleich des in Schritt 8 berechneten Rohkontrasts Co mit dem vordefinierten Schwellenkontrast Cs Wenn der Rohkontrast Co größer ist als der Schwellenkontrast Cs, Übergang zu Schritt 9 (E9) Wenn der Rohkontrast Co kleiner ist als der Schwellenkontrast Cs, Rückkehr zu Schritt 5 (E5)
Schritt 9 (E9): Ausschalten der ersten Beleuchtungsvorrichtung (1) und Rückkehr zu Schritt 1 (E1)

8. Verfahren nach dem vorhergehenden Anspruch, **dadurch gekennzeichnet, dass** es ferner, nacheinander in Schritt 8 (E8), wenn der Rohkontrast Co kleiner ist als der Schwellenkontrast Cs, einen Schritt 10 (E10) umfasst, der in der Aktivierung der Wiedergabevorrichtung für die vor dem Fahrzeug SA befindliche Szene gemäß einem der Ansprüche 5 bis 6 besteht, bevor zu Schritt 5 (E5) zurückgekehrt wird.

## Claims

1. A vehicle lighting system comprising:
∘ an acquisition device (3) for the scene located in front of the vehicle SA comprising an image sensor,
∘ a first lighting device (1) comprising at least one light source capable of emitting a first light beam of a first intensity illuminating said scene so as to increase the contrast of the images captured by the image sensor,
∘ a second lighting device (2) comprising a light source emitting a second light beam of a second intensity performing a lighting function and/or regulatory signaling at the front of the vehicle,
∘ a control unit (4) which activates the first lighting device (1) when a first contrast value, called raw contrast Co, of the images captured by the image sensor is lower than a predefined threshold contrast Cs, said raw contrast of the images captured by the image sensor corresponding to the contrast of the images captured when the lighting device is not activated,
∘ the first lighting device (1) and the second lighting device (2) being connected to a compensation device (8) allowing to compensate the first and second intensities of the light beams emitted by the first (1) and second (2) lighting devices, **characterized in that** the light source of the first lighting device (1) is a visible source configured to generate modulated illumination at a frequency higher than 50Hz, and **in that** the acquisition device is capable of acquiring an image at the moment of modulation where the intensity of the source is highest.

2. A vehicle lighting system according to claim 1, **characterized in that** the first lighting device (1) and the second lighting device (2) are distinct.

3. A vehicle lighting system according to claim 1, **characterized in that** the first lighting device (1) and the second lighting device (2) are combined.

4. A vehicle lighting system according to any of the preceding claims, **characterized in that** the light source of the first lighting device (1) emits P-type polarized light.

5. A vehicle lighting system according to any of the preceding claims, **characterized in that** it comprises a restitution device allowing to restore to the driver the scene located in front of the vehicle SA and captured by the acquisition device (3) with a higher contrast than that of the same scene SA perceived by the driver without the restitution device.

6. A vehicle lighting system according to claim 5, **characterized in that** the restitution device is a complementary lighting device (7) allowing to illuminate towards the front of the vehicle and arranged to illuminate the marking strips (40, 41) of the edges of the road on which the vehicle is located, at the front of the vehicle.

7. A method for controlling a vehicle lighting system according to any of claims 1 to 6, **characterized in that** it comprises at least the following sequence of steps: Step 1 (E1): Acquisition of the scene located in front of the vehicle SA by the acquisition device (3) Step 2 (E2): Calculation of the raw contrast Co of the images captured by the image sensor Step 3 (E3): Comparison of the raw contrast Co calculated in step 2 (E2) with the predefined threshold contrast Cs
If the raw contrast Co is greater than the threshold contrast Cs, resume at step 1 (E1) If the raw contrast Co is less than the threshold contrast Cs, proceed to step 4 (E4)
Step 4 (E4): Activation of the first lighting device (1) Step 5 (E5): Acquisition of the scene located in front of the vehicle SA by the acquisition device (3) Step 6 (E6): Calculation of the corrected contrast Co of the images captured by the image sensor Step 7 (E7): Calculation of the raw contrast Co of the images captured by the image sensor taking into account the contribution of the first lighting device (1) to the corrected contrast Co
Step 8 (E8): Comparison of the raw contrast Co calculated in step 8 with the predefined threshold contrast Cs If the raw contrast Co is greater than the threshold contrast Cs, proceed to step 9 (Eg) If the raw contrast Co is less than the threshold contrast Cs, resume at step 5 (E5)
Step 9 (E9): Extinction of the first lighting device (1) and resume at step 1 (E1)

8. A method according to the preceding claim, **characterized in that** it further comprises, successively at step 8 (E8), when the raw contrast Co is less than the threshold contrast Cs, a step 10 (E10) consisting in activating the restitution device for the scene located in front of the vehicle SA according to one of claims 5 to 6, before resuming at step 5 (E5).
